# EUROPEAN PATENT APPLICATION

(11) **EP 1 921 898 A1**
(43) Date of publication of application: **14.05.2008**
(21) Application number: 06123968.7
(22) Date of filing: 13.11.2006
(51) Int. Cl.: H05B 6/64

(54) **Method and device for heating multiple samples by microwave radiation**

(71) Applicant: Anton Paar GmbH, 8054 Graz (AT)
(72) Inventor: Zach, Johannes, 8323, Graz (AT); Zentner, Rainer, 8020, Graz (AT); Stadler, Alexander, 8054, Graz (AT)
(74) Representative: Reitstötter - Kinzebach

(57) **Abstract**

The present invention relates to a container and a device for heating multiple samples, e.g. for microwave-assisted synthesis or analysis of substances, said device comprising a source of microwave radiation (63); and a control unit (65) cooperating with said source of microwave radiation for generating a microwave field within a chamber (61) of the device. The chamber is adapted to receive at least one container (10, 20) which is made from a material capable of being heated by absorption of microwave radiation, such as silicone carbide, and which comprise wells for sample materials arranged in a microtiter configuration.

## Description

The present invention relates to a container for heating multiple samples by microwave radiation and a microwave heating device using one or more of the subject containers. The present invention also relates to a method for microwave assisted parallel analysis or synthesis of substances.

In microwave-assisted chemistry, microwaves are used to initiate, drive, or otherwise enhance chemical or physical reactions. Generally, the term "microwaves" typically refers to electromagnetic radiation having a frequency within a range of about 10⁸ Hz to 10¹² Hz. These frequencies correspond to wavelengths between about 300 cm to 0,3 mm. Microwave-assisted chemistry is currently employed in a variety of chemical processes. Typical applications in the field of analytical chemistry include ashing, digestion and extraction methods. In the field of chemical synthesis, microwave radiation is typically employed for heating reaction materials because many chemical reactions proceed favourably under higher temperatures. In addition, when pressureriseable reaction vessels are used, many analytical or synthetical processes can be further enhanced by increasing the pressure in the vessel. Further, when, for example, digestion methods for analytical purposes are used, the generation or expansion of gases inside the vessel will necessarily increase the internal pressure. Thus, in order to ensure that no reaction products are lost for subsequent analysis, vessels must be used which are able to withstand high internal pressures in these cases.

Usually, most microwave-assisted reactions are performed in open or, preferably, in sealed vessels at temperatures rising up to 250 °C. Typical pressures range from below atmospheric pressure, e.g. in solvent extraction processes, up to 20 bar, e.g. in digestion or synthesis processes.

In recent years parallel synthesis of substances has become an important method in chemical research, especially in combinatorial chemistry which involves the rapid, preferably concurrent, synthesis of a large number of different but structurally related molecules. For example, in pharmaceutical or biomedical chemistry, so-called "libraries" of related compounds can rapidly be created by parallel synthesis using combinatorial methods. These compounds can be subsequently screened for specific pharmaceutical activity profiles. In material science, combinatorial chemistry is used to discover new materials or to modify known materials in order to enhance certain material properties.

Usually, only small amounts of reactants, solvents, catalytic materials and the like are employed in parallel synthesis for each individual reaction. Thus, reaction vessels are used which have a small working volume, typically ranging from one microlitre to some tens of millilitres.

In microwave-assisted chemistry, care has to be taken that each individual small vessel is treated with the same amount of microwave radiation so that uniform temperature and/or pressure profiles are obtained over the whole assembly of vessels used for parallel synthesis or analysis. Due to the relatively large wavelength of microwave radiation which is often in the range of the individual sample dimensions, and due to typical field inhomogeneities encountered within a microwave cavity, it turns out that reliable and comparable parallel analysis of synthesis is a challenge which cannot readily be accomplished using conventional vessels for treating multiple samples.

It is therefore an object of the present invention to provide an improved container for heating multiple samples by microwave radiation, which is particularly suitable for parallel analysis or synthesis of substances, e.g. combinatorial synthesis, at elevated temperatures and/or elevated pressures and which allows for a uniform heating of the samples. It is also an object of the present invention to provide a container for heating multiple samples by microwave radiation which allows for a rapid and highly automated pre- and post-processing such that the container cannot only be employed for research purposes but can also readily be scaled-up for the production of compounds in significant amounts, e.g. in the kg-range. It is also an object of the present invention to provide a device for heating multiple samples in a microwave field wherein the container of the present invention is used. Finally, it is an object of the present invention to provide a method for microwave-assisted parallel analysis or synthesis of substances using the container and the device of the present invention.

These objects are achieved by providing a container for multiple samples by microwave radiation as defined in present claim 1. Preferred embodiments of the present invention are defined in the dependent claims.

Consequently, the present invention relates to a container for heating multiple samples by microwave radiation, comprising a body having a plurality of wells formed therein for receiving said samples, said body being made from heat resistant, thermally conductive and chemically inert material, wherein said body is adapted to be heated by the absorption of microwave radiation.

Thus, by making the container of the invention from a material which couples well to the microwave field, it is possible to heat the samples indirectly via thermal contact with the container which is itself directly heated by microwave radiation and, therefore, acts as a heat source for the samples disposed in the wells which are formed within the bulk of the container material. With the container of the present invention, almost any sample material can be used for microwave-assisted chemistry. Thus, not only solvents having high absorbance for microwave radiation, such as water, can be used, but also low absorbing or even microwave transparent solvents such as dioxane, toluene, dichloromethane can be heated effectively in the microwave field.

Further, any inhomogeneous heating of the container of the invention will readily be balanced due to the high thermal conductivity of the material employed for manufacturing the container of the invention. Thus, the samples in each well are uniformly heated with essentially the same amount of energy.

According to a preferred embodiment of the invention, the body of the container comprises a microwave heatable ceramic material. Preferably, the body of the container comprises silicone carbide (SiC).

According to one embodiment, the body of the container is made from a composite material comprising a matrix of a heat-resistant and chemically inert plastic material, such as a silicone rubber, and said ceramic material, e.g. a SiC-powder, dispersed within said matrix. Such composites can easily resist temperatures up to 250 °C, which are typically employed in microwave-assisted chemistry.

According to another embodiment of the invention, the body of the container is made completely from said ceramic material, e.g. from silicone carbide. Silicon carbide is particularly preferred due to its high melting point, its high chemical inertness and its high thermal conductivity. Most importantly, however, silicone carbide effectively absorbs microwave radiation so that that a container body made from such a material can be heated effectively in a microwave field. Silicone carbide also has very low thermal expansion coefficient.

Preferably, the wells are arranged in a rectangular matrix on an essentially flat upper face of said body of the container. In a particularly preferred embodiment, the wells are arranged in a microtiter configuration, i.e. in a standardized matrix of wells, e.g. in a 6x8 or 12x8 pattern of 48 or 92 wells, respectively. Each well has preferably a working volume between 50 µl and 1 ml, typically around 300 µl.

Using a container having wells arranged in a standardized microtiter pattern allows the use of a large variety of commercially availably tools for convenient and often highly automated pre- and post-processing of the samples, thus enabling a high throughput of sample material.

The container of the invention may be used with open wells. Preferably, however, the container is provided with a top plate, which is detachably arranged on the body of the container for sealingly closing said wells during heating in the microwave field. This allows, for instance, the performance of pressurized reactions such that e.g. the solvents employed can be used at temperatures far above their boiling points at atmospheric pressure. Further, cross contamination between individual wells can effectively be excluded.

In addition, a base plate can be arranged below the body of the container. In this case, tightening means, such as tie rods, are preferably provided to releasably clamp the body of the container between said top plate and the base plate. The tie rods: can, for instance, be made from a stainless steel bolts and nuts assembly in order to achieve tight sealing of the wells up to pressures of approximately 20 bar. The base plate and the top plate can be made from any suitable material which is dimensionally stable at temperatures of up to 250 °C and at pressures of up to 20 bar. Preferably, however, the plates are made from a metal or metal alloy, e.g. from aluminium.

The top plate can be made from a material which exhibits a certain compressibility in order to improve the sealing of the wells. Preferably, however, especially when the top plate is made of a metal or a metal alloy, a compressible sealing means is provided between said top plate and said body. The compressible sealing means can e.g. be a flat sheet made of a chemically inert fluoroelasomer, e.g. from a material commercialized under the trade names Viton^{®} or Kalrez^{®} or from a silicone rubber.

Both the top plate and the sealing means are preferably provided with holes arranged in correspondence with the openings of the wells of the body of the container. In this case, it is preferred that a pierceable foil made from a heat-resistant, chemically inert material is provided for sealingly covering the openings of the wells. The foil can, for instance, be made from a suitable plastic material, such as PFA, PTFE or FEP. To access the samples in the wells after heat treatment in the microwave field has been completed, the foil can be pierced by a syringe-like device. Usually, the foil will be disposed of after use.

If the base plate is made from a metal or from a metal alloy, a spacer made from a material exhibiting reduced microwave absorbance can be arranged at least between the base plate and said body. The spacer may be formed as an inert spacer ring of an appropriate thermostable material, such as PEEK, and is used to improve the interaction between the microwave field and the body of the container. An additional spacer can also be arranged between the top plate and the body. The overall construction and shape of the container is preferably optimized to avoid any electrical interference.

The wells of the body of the container can be filled directly with sample material to be treated in the microwave field. However, it is also possible to use vials made from a chemically inert material which have a shape that allows their insertion into the wells of the container body, as well as their subsequent removal therefrom. Typically, the vials are made from a chemically inert material such as glass, quartz, PFA or PTFE. Alternatively, thin foils made from a chemically inert material such as PFA or PTFE may be used as a disposable liner of the wells of the container body.

The present invention is also directed to a device for heating multiple samples comprising at least one chamber adapted to receive at least one container of the present invention as defined above, a source of microwave radiation and a control unit cooperating with said source of microwave radiation for generating a microwave field in said chamber.

Preferably, a turntable is provided in said at least on chamber, said turntable being adapted to detachably support one or more of said containers. To achieve high throughput within one run in the device of the present invention, preferably several containers, e.g. between four and eight containers, can be carried by the turntable.

The control unit preferably comprises temperature sensing means for determining the temperature of said body and/or for determining the temperature of said samples within said wells. For instance, infrared sensors may be employed to determine the temperature of the surface of the body of the container.

Further, the control unit may comprise pressure sensing means for determining the pressure inside said wells via suitable transducers.

In addition,n means may be foreseen which allow for magnetic stirring in each well.

The present invention is also directed to a method for microwave-assisted parallel analysis or synthesis of substances, said method comprising filling samples of substances to be treated in the wells of a container as defined above and treating said samples with microwave radiation in a device as defined above.

The overall container can have typical microtiter plate dimensions. Alternatively, a carrier of any suitable material, such as aluminium or PEEK can be employed enabling further use in conventional work-up systems such as centrifuges, freezedriers or autosamplers.

The present invention will now be described in more detail with respect to a particularly preferred embodiment of the invention. The preferred embodiment is depicted on the attached drawings.
- Fig. 1: is a top perspective view of a first embodiment of the container of the present invention consisting of a container body made from a 6x8 silicon carbide well plate;
- Fig. 2.: is an exploded view of a second embodiment of the container of the invention, comprising the container of Fig. 1 and a plate assembly;
- Fig. 3: the completely assembled container of Fig. 2;
- Fig. 4: is a top perspective view of the aluminium top plate of the container of Fig. 2 and 3;
- Fig. 5: is a bottom perspective view of the top plate of Fig. 4;
- Fig. 6: is a top perspective view of the base plate of the container of Fig. 2 and 3;
- Fig. 7: is a top perspective view of a turntable used in the device of the present invention, equipped with four assembled containers of Fig. 3;
- Fig. 8: is a top perspective view of the turntable of Fig. 7 without containers;
- Fig. 9: is a perspective view of a preferred embodiment of the device of the present invention; and
- Fig. 10: is a front perspective view of a carrier suitable for the assembled container of Fig. 3.

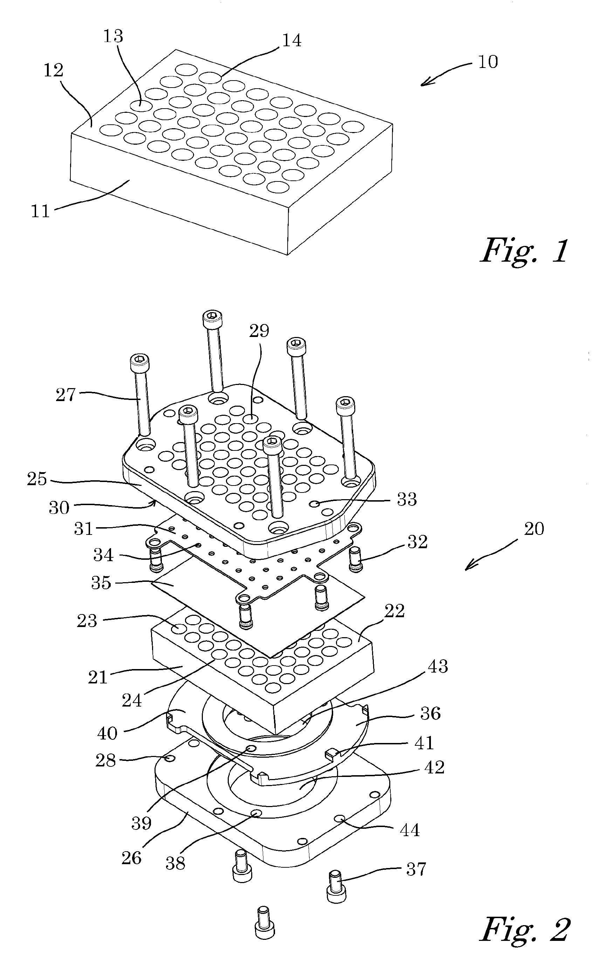

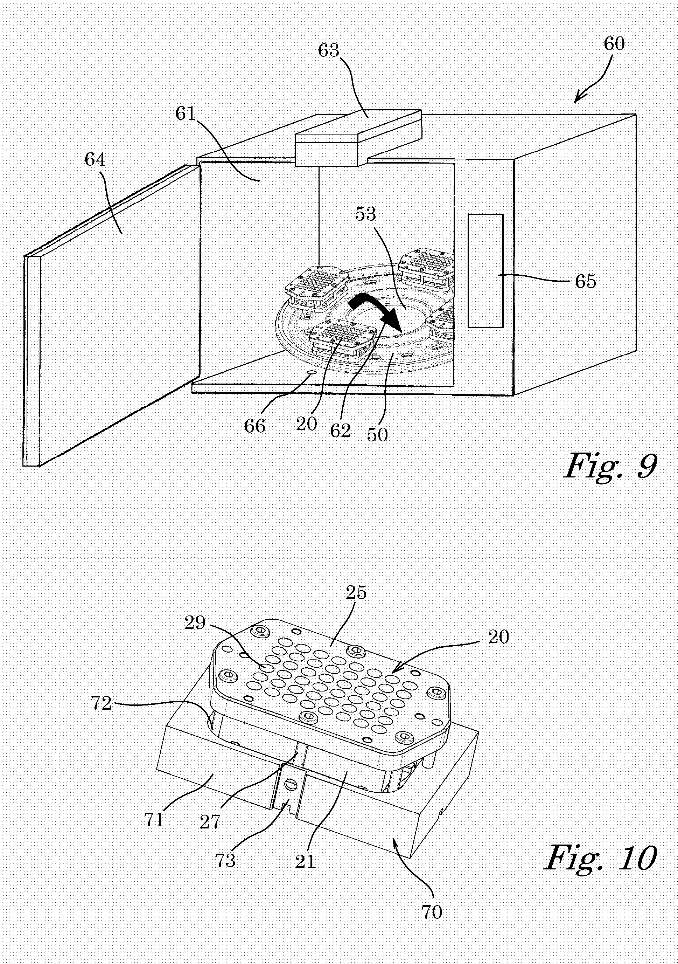

In Fig. 1, a first embodiment of the container of the present invention is shown. The container 10 consists of a container body 11 which has an essentially cubic shape and is made from silicone carbide. As known to the skilled person, such a container body can e.g. be manufactured by sintering silicone carbon powder under appropriate temperature and pressure conditions. In the present case, high-temperature sintering of a green compact of silicone carbide resulted in a corresponding ceramic material which exhibited excellent properties regarding microwave coupling efficiency, heat capacity and uniform heat distribution within the container body 11. In the upper surface 12 of the container body 11, multiple cavities are provided forming a 6 x 8 matrix of individual wells 13 which are arranged in a standardized format according to the dimensions of conventionally available microtiter plates. The container 10 can be used directly for heating sample materials which have been filled into the wells via openings 14 provided in the upper surface of the body 11. For instance, the container 10 can be placed into the cavity 61 of the microwave heating device 60 depicted in Fig. 9. Without any additional lid or seal, the container 10 can thus be used for heating sample materials in open wells 13, i.e. for chemical synthesis under atmospheric pressure, for evaporation processes or unpressurized digestion processes. The container body 10 itself can have dimensions corresponding to the standardized dimensions of microtiter plates. Alternatively, the container 10 can be inserted into a carrier having suitable microtiter plate dimensions, e.g. a carrier similar to the carrier 70 depicted in Fig. 10.

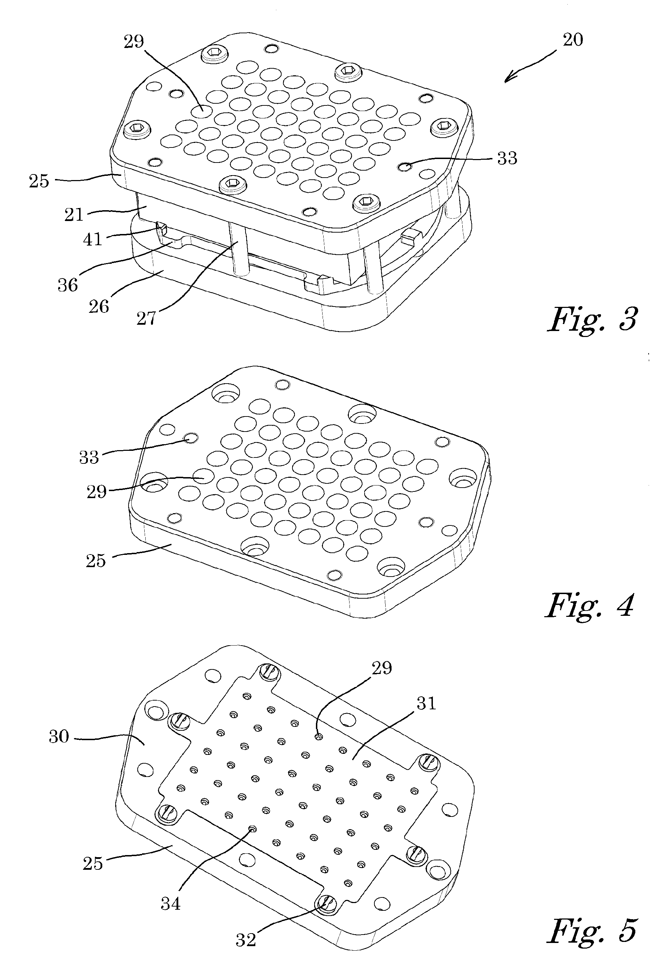

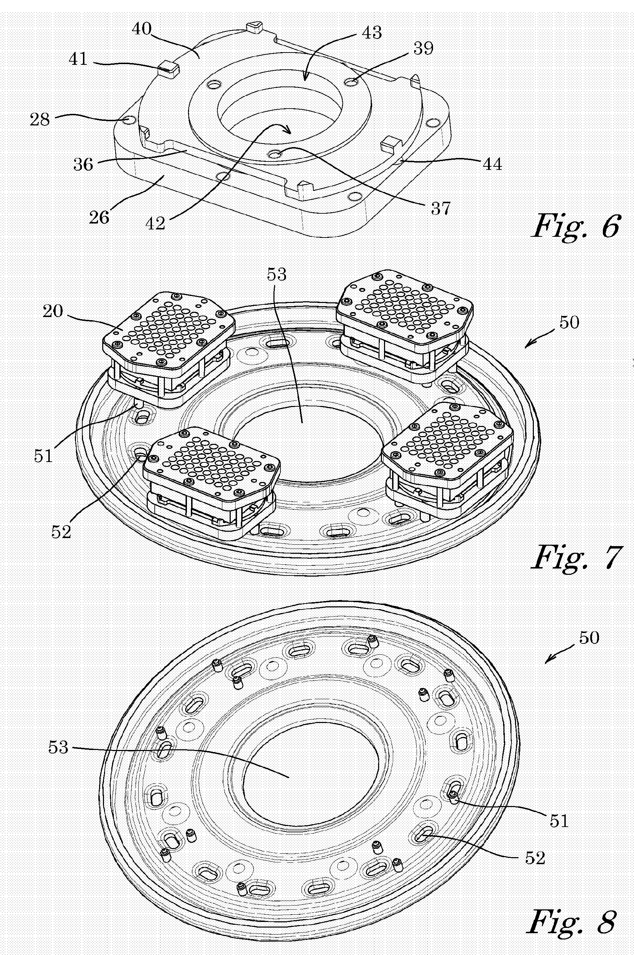

A particularly preferred embodiment of a sealable and pressurizeable container of the present invention is shown in Fig. 2 depicting an exploded view of the container and Fig. 3 depicting the container of Fig. 2 in an assembled state, respectively. As best visible in Fig. 2, the container 20 comprises a container body 21, which can be similar or even identical to the container body 11 described in connection with Fig. 1. Again, the container body 21 forms a silicone carbide well plate and has an upper surface 22 in which a rectangular matrix of wells 23 is provided. The sintered silicone carbide plate 21 has a length of 82 mm, a width of 62.5 mm and a height of 18 mm. Each well 23 has a volume of 410 µl and can be charged with approximately 300 µl of a reaction mixture which is to be processed at high temperatures and/or high pressures. In order to provide for a pressure tight sealing of the openings 24 of each individual well 23, the container body 21 is arranged between an aluminium top plate 25 and an aluminium base plate 26. Top plate 25 and base plate 26 are clamped together by suitable tie rods which in the present case are formed by six stainless steel hex bolts 27 having threaded end sections which cooperate with corresponding threaded holes 28 provided in the base plate 26. In the present case, the top plate 25 has a length of 118 mm, a width of 80 mm and a height of 10 mm, while the base plate 26 has a length of 96 mm, a width of 75 mm and a height of 10 mm. The top plate 25 can be formed as a solid plate sealingly covering the openings 24 of the wells 23. In the embodiment depicted in Fig. 2 and 3, however, the top plate 25 is provided with conical boreholes 29 arranged in correspondence with the wells 23 of the container body 21. The boreholes 29 are likewise arranged in a 6 x 8 matrix for sample withdrawal from the wells 23 and have a minimum diameter of 1.2 mm in the bottom face 30 of plate 25. On the bottom face 30 of top plate 25, a sealing mat 31 having a thickness of 1.0 mm is fixed by six PEEK bolts 32 which cooperate with corresponding boreholes 33 provided in the top plate 25. The sealing mat 31 is made from an elastomeric fluoropolymer material, e.g. from Vitton^{®}. The sealing mat 31 is provided with circular perforations 34 arranged in correspondence with the wells 23 of the container body 21 providing access to the wells via boreholes 29 to allow for an easy sample withdrawal. Top and bottom face of the top plate 24 are depicted in more detail in Fig. 4 and 5, respectively. In order to sealingly cover the wells 23 of the silicone carbide plate 21, a PFA foil 35 having a thickness of 0.3 mm is placed between the elastomeric mat 31 and the upper surface 22 of the silicone carbide plate 21. Foil 35 acts as a disposable septum, e.g., for sample withdrawal after the reaction in the microwave field is completed, when foil 35 can easily be penetrated by means of a syringe needle. Between the aluminium base plate 26 and the silicon carbide well plate 21, a spacer 36 made from PEEK is arranged. Spacer 36 is fixed to the base plate 26 with three PEEK bolts 37 which engage through holes 38 provided in the base plate 26 into threaded openings 39 foreseen in spacer 36. Spacer 36 has an overall height of 6 mm. The subassembly consisting of base plate 26 and spacer 36 is more clearly depicted in Fig. 6.

Fig. 3 illustrates a front perspective view of the properly assembled container 20 of Fig. 2 in an appropriately sealed microtiter well plate setup having an essentially cubic shape with a length of 118 mm, a width of 80 mm and a height of 46 mm. The container 20 as depicted in Fig. 3 can be positioned in a microwave field, for instance in the microwave cavity 61 of the heating device 60 depicted in Fig. 9. Hand-tight closure of the six hex bolts 27 is sufficient to ensure tightness up to internal pressures within the wells 23 of at least up to approximately 20 bar. After the reaction, samples can easily be withdrawn by penetrating the PFA foil 35 (which is not visible in Fig. 3 but can be clearly seen in Fig. 2) with a syringe needle passed through the corresponding boreholes 29 of plate 25 and the circular openings 34 of the elastomeric sealing mat 31. Penetration of the foil 35 sealing each well 23 after completion of the reaction also ensures that any possibly remaining pressure inside the wells will be reduced to safe levels in order to assure safe opening of the container by removal of the aluminium top plate 25.

Fig. 4 is a perspective top view of the aluminium top plate used in the container of Fig. 2 and 3 where especially the arrangement of boreholes 29 can be seen more clearly. The boreholes 29 corresponding to the wells 23 of the microtiter plate 21 have a conical cross sectional shape (not visible in the drawings) for simplified insertion of a needle of a syringe for sample withdraw. The shape of the top plate 25 is optimised to have maximum strength for tight closure with a minimum amount of required material.

The under side of top plate 25 is shown in detail in Fig. 5 with the elastomeric sealing mat 31 fixed to the bottom of plate 25 by means of six PEEK bolts 32. As the mat 31 exhibits a certain compressibility, it ensures that, during assembly of the container 20, the PFA foil 35 is pressed smoothly and evenly onto the top of the silicone carbide microtiter well plate 21 thus achieving a tight sealing of every single well 23. As clearly indicated in Fig. 5, the elastomeric mat 31 is provided with punctured openings 34 corresponding to the boreholes 29 of top plate 25 and to the wells 23 of silicone carbon plate 21, respectively.

Fig. 6 depicts a sub-assembly of the container of Fig. 2 and 3 consisting of the PEEK spacer 36 mounted onto the aluminium base plate 26 by means of three PEEK bolts 37. On the surface 40 of spacer 36, several ribs 41 are circumferentially arranged to act as guiding means for the silicone carbide well plate 21 in order to ensure proper positioning for accurate sealing of the wells 23. The PEEK spacer 36 reduces electromagnetic shielding effects of the base plate 26, thus allowing a better access of the microwave radiation towards the silicone carbon well plate 21. A similar spacer may be provided above the plate 21, but in practice, it was found that the provision of the elastomeric mat 34 and of foil 35 sufficiently reduces the shielding effect of the metallic top plate 25. As indicated in Fig. 2 and 6, mating circular openings 42, 43 are provided in base plate 26 and spacer 36, respectively. These openings provide a pathway for infrared radiation emitted from the bottom of well plate 21 which can be measured by an appropriately positioned infrared sensor in order to provide for an overall temperature and reaction control scheme to be employed by a control unit of a microwave heating device (c.f. infrared sensor 66 schematically depicted in Fig. 9). Finally, base plate 26 is provided with three additional boreholes 44 which allow accurate positioning of the assembled unit on a turn table as described in connection with the embodiment of Fig. 7 and 8 in more detail.

In microwave assisted chemistry, it is preferred that samples which are placed within a microwave cavity be moved within the cavity during microwave irradiation in order to balance any non-uniformities or inhomogeneities of the microwave field during the irradiation period. Usually, the samples are placed on a turntable which is rotated within the microwave cavity using suitable drive means. A preferred embodiment of a turntable which can be used with the container 20 of Fig. 2 and 3 is depicted in Fig. 7 and 8. As indicated in Fig. 7, the turntable 50 is designed to carry up to four assembled container units 20. The turntable 50 is made from a polyethylene composite material and has four groups of three PEEK bolts 51 each on its upper surface which can engage into the boreholes 44 of the bottom plates 26 of container 20 to ensure proper positioning of the containers 20. At the bottom side of turntable 50, four marks, e.g. reflection marks, can be provided to ensure proper recognition of each individual container assembly 20 while rotating inside a microwave cavity. Further, in correspondence with the openings 42, 43 of each container 20, suitable openings 52 are arranged in the turntable in order to provide a passage for infrared radiation from the silicone carbon well plates to one or more infrared sensors positioned beneath the turntable 50. The assembly of Fig. 7 permits a maximum throughput of 192 parallel reactions. In other embodiments, more than four container units 20 may be arranged on a single turntable. It is also possible to employ a stack of several turntables mounted on top of each other. The turntable as a central opening 53 adapted to cooperate with drive means of a microwave heating device.

In a variant of the turntable arrangement of Fig. 7 and 8, the individual members of each container 20 , e.g. top and/or base plate 25, 26 of each container 20, and/or the elastomeric mat 31 and/or foil 35 the and/or the spacer 36 can be replaced by suitably formed ring-shaped members having dimensions corresponding to the turntable 50 of Fig. 7 and 8, respectively. While even the silicone carbide well plates 21 could be formed as a single ring-shaped members, it is preferred to maintain the microtiter arrangement for easy pre- and post-processing.

Fig. 9 depicts a device 60 for heating multiple samples comprising a chamber 61 acting as microwave cavity which is adapted to receive at least one turntable 50 with container assemblies 20 as described in connection with Fig. 7. As indicated by the arrow 62, the turntable is placed on top of suitable drive means (not shown in the schematic drawing of Fig. 9) for rotating the turntable. The microwave heating device 60 is provided with a microwave generator 63, which emits microwave radiation inside cavity 61. A door 64 is provided for closing the cavity 61 in a microwave-tight fashion. Microwave heating device 60 further comprises a control unit 65,
cooperating with microwave generator 63 for controlling power and emission time of the microwave field generated inside of the cavity 61. Close to the bottom of microwave cavity 61, an infrared temperature sensor 66 is arranged which is also connected with control unit 65. The microwave heating device 60 may also comprise means for stirring the content of the wells 23 using e.g. magnetic stirrers disposed inside each well. Further, means for measuring internal pressures inside selected wells or inside each well can be provided. Appropriate techniques are known to the person skilled in the art of microwave chemistry.

In the embodiment depicted in Fig. 10, a carrier 70 is depicted having outer dimensions which are identical to those of a conventional 12x8 microtiter plate, namely a length of 127 mm and a width of 86 mm. The carrier 70 comprises an aluminium frame 71 defining an internal cavity 72 having inner dimensions which essentially correspond to the outer dimensions of the container assembly 20 of Fig. 2 and 3. Thus, the carrier 70 is adapted to house the container 20 such that the assembly of Fig. 10 can be used in pre- and post heating procedures, for example employing centrifuges, freeze-dryers or auto-samplers which are adapted to the dimensions of conventional microtiter plates. The aluminium top plate 25, which is still mounted in the drawing of Fig. 10, can of course be removed if certain pre- or post-heating procedures require easy access to the wells 23 of silicone carbon plate 21. As depicted in the drawing, suitable guiding bolts 73 may be provided for fixing the container 20 inside carrier 70.

## Claims

1. A container for heating multiple samples, comprising a body (11, 21) having a plurality of wells (13, 23) formed therein for receiving said samples, said body (11, 21) being made from a heat-resistant, thermally conductive and chemically inert material, wherein said body (11, 21) is adapted to be heated by the absorption of microwave radiation.

2. The container according to claim 1, wherein said body (11, 21) comprises a microwave-heatable ceramic material.

3. The container according to claim 2, wherein said body (11, 21) comprises silicone carbide (SiC).

4. The container according to one of claims 1 to 3, wherein said wells (13, 23) are arranged in a rectangular matrix on an essentially flat upper face (12, 22) of said body (11, 21).

5. The container according to one of claims 1 to 4, wherein a top plate (25) is detachably arranged on said body (21) for sealingly closing said wells (23).

6. The container according to claim 5, wherein a base plate (26) is arranged below said body (21) and wherein tightening means (27) are provided to releasably clamp said body (21) between said top plate (25) and said base plate (26).

7. The container according to claim 6, wherein a compressible sealing means (31) is provided between said top plate (25) and said body (21).

8. The container according to one of claims 1 to 7, wherein a pierceable foil (35) made from a heat resistant, chemically inert material is provided for sealingly covering said wells (23) provided on said body (21).

9. The container according to one of claims 6 to 8, wherein a spacer (36) made from a material exhibiting reduced microwave absorbance, is arranged between said base plate (26) and said body (21).

10. The container according to one of claims 1 to 7, wherein vials made from a chemically inert material are provided to be inserted into at least some of said plurality of wells (11, 23).

11. A device for heating multiple samples comprising
at least one chamber (61) adapted to receive at least one container (10, 20) as defined in one of claims 1 to 8;
a source of microwave radiation (63); and
a control unit (65) cooperating with said source of microwave radiation for generating a microwave field in said chamber (61).

12. The device according to claim 11, wherein a turntable (50) is provided in said at least on chamber (61), said turntable (50) being adapted to detachably support one or more of said containers (10, 20).

13. The device according to one of claim 11 or 12, wherein said control unit comprises temperature sensing means (66) for determining the temperature of the body (11, 21) of said container (10, 20) and/or for determining the temperature of said samples within said wells (13, 23) of said container (10, 20).

14. The device according to one of claim 11 to 13, wherein said control unit comprises pressure sensing means for determining the pressure inside said wells (23).

15. A method for microwave-assisted parallel analysis or synthesis of substances, said method comprising filling samples of substances to be treated into the wells of a container as defined in one of claims 1 to 10 and treating said samples with microwave radiation in a device as defined in one of claims 11 to 14.

## Amended claims

### Amended claims in accordance with Rule 137(2) EPC.

**1.** A container for heating multiple samples, comprising a body (11, 21) having a plurality of wells (13, 23) formed therein for receiving said samples, said body (11, 21) being made from a heat-resistant, thermally conductive and chemically inert material, wherein said body (11, 21) is adapted to be heated by the absorption of microwave radiation.

**2.** The container according to claim 1, wherein said body (11, 21) comprises a microwave-heatable ceramic material.

**3.** The container according to claim 2, wherein said body (11, 21) comprises silicon carbide (SiC).

**4.** The container according to one of claims 1 to 3, wherein said wells (13, 23) are arranged in a rectangular matrix on an essentially flat upper face (12, 22) of said body (11, 21).

**5.** The container according to one of claims 1 to 4, wherein a top plate (25) is detachably arranged on said body (21) for sealingly closing said wells (23).

**6.** The container according to claim 5, wherein a base plate (26) is arranged below said body (21) and wherein tightening means (27) are provided to releasably clamp said body (21) between said top plate (25) and said base plate (26).

**7.** The container according to claim 6, wherein a compressible sealing means (31) is provided between said top plate (25) and said body (21).

**8.** The container according to one of claims 1 to 7, wherein a pierceable foil (35) made from a heat resistant, chemically inert material is provided for sealingly covering said wells (23) provided on said body (21).

**9.** The container according to one of claims 6 to 8, wherein a spacer (36) made from a material exhibiting reduced microwave absorbance, is arranged between said base plate (26) and said body (21).

**10.** The container according to one of claims 1 to 7, wherein vials made from a chemically inert material are provided to be inserted into at least some of said plurality of wells (11, 23).

**11.** A device for heating multiple samples comprising
at least one chamber (61) adapted to receive at least one container (10, 20) as defined in one of claims 1 to 8;
a source of microwave radiation (63); and
a control unit (65) cooperating with said source of microwave radiation for generating a microwave field in said chamber (61).

**12.** The device according to claim 11, wherein a turntable (50) is provided in said at least on chamber (61), said turntable (50) being adapted to detachably support one or more of said containers (10, 20).

**13.** The device according to one of claim 11 or 12, wherein said control unit comprises temperature sensing means (66) for determining the temperature of the body (11, 21) of said container (10, 20) and/or for determining the temperature of said samples within said wells (13, 23) of said container (10, 20).

**14.** The device according to one of claim 11 to 13, wherein said control unit comprises pressure sensing means for determining the pressure inside said wells (23).

**15.** A method for microwave-assisted parallel analysis or synthesis of substances, said method comprising filling samples of substances to be treated into the wells of a container as defined in one of claims 1 to 10 and treating said samples with microwave radiation in a device as defined in one of claims 11 to 14.
